# EUROPEAN PATENT SPECIFICATION

(11) **EP 2 850 946 B1**
(45) Date of publication and mention of the grant of the patent: **24.04.2019**
(21) Application number: 14178709.3
(22) Date of filing: 28.07.2014
(51) Int. Cl.: A21B 1/40, F23N 1/00

(54) **A STOVE FUELLED WITH PELLETS FOR COOKING FOOD AND METHOD FOR OPERATING SUCH A STOVE**
MIT PELLETS BETRIEBENER BACKOFEN UND VERFAHREN ZUM BETRIEB EINES SOLCHEN BACKOFENS
FOUR DE CUISSON ALIMENTÉ EN GRANULÉS ET PROCÉDÉ D'OPÉRATION D'UN TEL FOUR

(30) Priority: 29.07.2013 IT VR20130179
(43) Date of publication of application: 25.03.2015
(73) Proprietor: ING. POLIN & C. S.p.A., 37135 Verona (IT)
(72) Inventor: Cometti, Cesare, 37135 Verona (IT)
(74) Representative: Lissandrini, Marco

(56) References cited:
- EP-A1- 2 354 654
- WO-A1-2009/138281
- DE-A1-102009 011 625

## Description

This invention relates to a stove fuelled with pellets for cooking food. More specifically, this invention relates to stoves with a burner for pellets. The term "pellet" refers to the compressed wooden pieces which are used as fuel.

Preferably, this invention relates to the sector of rotary stoves which comprise a rotatable carriage positioned inside a cooking chamber. The rotatable carriage rotates, during use of the stove, about its own axis vertical, in such a way as to uniformly heat the products placed on the carriage. It should be noted that the rotary stoves are usually used in the bread and pastry making industries since the products belonging to these sectors require certain coking conditions.

More specifically, a stove made according to the prior art comprises a frame which defines internally a cooking chamber and a heating chamber at least partly separated by a dividing wall. Moreover, the stove comprises a pellet burner positioned in the heating chamber to generate heat. In detail, the burner is configurable at least between a switched off state and an active state.

Naturally, the stove comprises a tank for pellets connected to the burner for feeding the pellets to the burner. Preferably, the stove comprises a unit (usually a screw feeder) for feeding pellets towards the burner.

Moreover, the stove comprises a fan operatively associated with the heating chamber for creating a flow of hot air from the heating chamber towards the cooking chamber in such a way as to heat the food. Normally, the burner and the fan are positioned in separate compartments inside the heating chamber. In other words, the heating chamber defines a zone for heat exchange between the heat produced by the burner and the air moved by the fan.

Moreover, the cooking chamber has an open side where there is a door movable between an open position, in which the cooking chamber is in fluid communication with the outside, and a closed position. Obviously, during the open position it is possible to introduce the food inside the cooking chamber.

In addition, there is a unit for controlling the burner operatively connected to the burner for controlling it between one state and the another. More specifically, the control unit comprises an external interface by which the user can enter certain parameters for the stove.

Moreover, the stove comprises means for measuring the temperature of the cooking chamber operatively connected to the control unit for transmitting to the latter the information relative to the instantaneous temperature measured.

More in detail, in order to switch on the stove, the control unit is configured for:
activating the means for feeding the pellets so as to carry the fuel to the burner;
configuring the burner in the active condition (switching it on);
maintaining the burner in the active condition at least until reaching a temperature value pre-set by the user.

However, in the case of stoves fuelled with pellets, this prior art is not free of drawbacks.

A first drawback is linked to the fact that the pellets which are fed to the burner are not always of the same type. In effect, there are various types of pellets available on the market with different qualities linked to the production process rather than to the type of wood used for the pellets. Consequently, the quantity of heat produced by the combustion of different types of pellets can vary. For this reason, a certain type of pellet can generate more heat than another type of pellet (assuming the same quantity of pellets per type). On the other hand, the user is not always aware of the type of pellets which have been placed in the tank, so it would not even be possible to know beforehand the quality of the pellets present in the tank.

Moreover, a correct combustion does not always takes place in the stove. In effect, a partial obstruction of the fumes exhaust pipe and/or a malfunction of the burner and/or a partial obstruction of the air intake duct might generate an incorrect combustion. The consequence of the irregular combustion is a different heat generation inside the heating chamber.

In other words, the type of pellets and the correctness of the combustion can influence, in an uncontrolled manner, the heat generation inside the heating chamber. Consequently, these problems affect the cooking of the food, which could be inadequate and incorrect.

Examples of known stoves are disclosed in documents DE102009011625 and EP2354654.

In this situation, the aim of this invention is to provide a stove fuelled with pellets which overcomes the above mentioned drawbacks.

More specifically, the aim of this invention is to provide a stove fuelled with pellets which allows the generation of heat which is as constant as possible under equal conditions required by the user.

Still more specifically, the aim of this invention is to provide a stove which allows the heat generation as constant as possible irrespective of the variables which influence the combustion.

The above mentioned aims are substantially achieved by a stove fuelled with pellets as described in the accompanying claims.

Further characteristic features and advantages of this invention will emerge more clearly from the detailed description of several preferred, but not exclusive embodiments of a stove fuelled with pellets illustrated in the accompanying drawings, in which:
- Figure 1 shows a schematic top view of a stove fuelled with pellets according to this invention;
- Figure 2 shows a schematic view of a block diagram of the system for controlling the stove fuelled with pellets of Figure 1; and
- Figure 3 shows a schematic view of a table relative to the conditions and intermediate operational stages of the stove.

With reference to the above mentioned drawings, the numeral 1 denotes in its entirety a stove fuelled with pellets according to the invention.

More specifically, the stove 1 comprises a frame 2 forming internally a space. More specifically, the frame 2 comprises an external containment structure in which the space is defined. Moreover, the frame 2 comprises a dividing wall 3 located inside the space for dividing it into a chamber 4 for cooking foods and a heating chamber 5. It should be noted that the cooking chamber 4 is the space in which the food to be cooked is placed, whilst the heating chamber 5 is the space assigned for generating heat.

In addition, the dividing wall 3 has openings 6a, 6b that put in fluid communication the cooking chamber 4 with the heating chamber 5 in such a way as to allow the passage of heat from the heating chamber 5 to the cooking chamber 4.

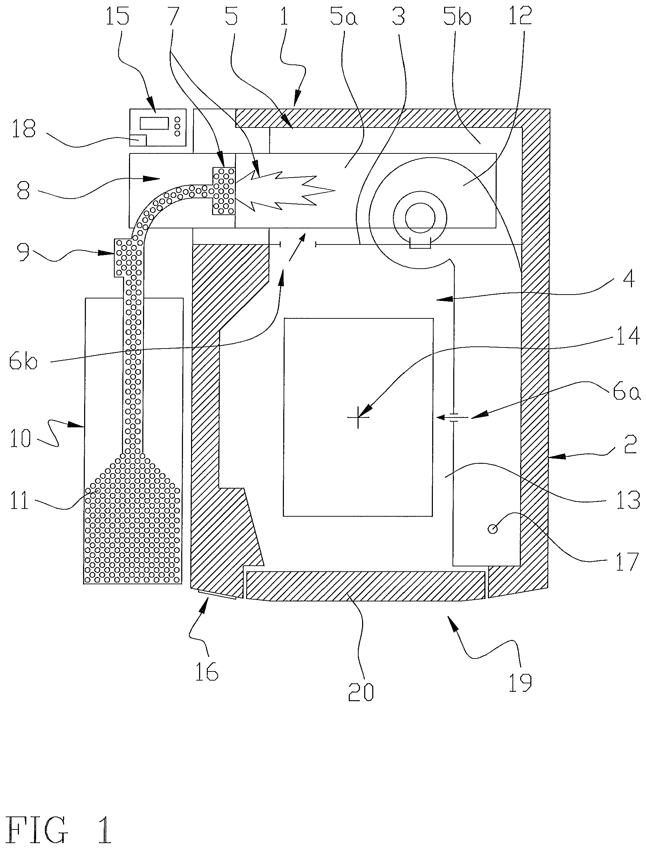

Moreover, the stove 1 comprises a pellet burner 8 positioned in the heating chamber 5 and a unit 9 for feeding pellets to the burner 8 operatively connected to the burner 8 for feeding pellets to the burner 8. More specifically, the stove 1 comprises a tank 10 for containing the pellets 11 and the unit 9 for feeding the pellets 11 is positioned between the tank 10 and the burner 8 to transport the pellets 11 to the latter. Preferably, the unit 9 for feeding the pellets 11 comprises a duct extending along a respective main direction of extension from the tank 10 to the burner 8. Moreover, the unit 9 for feeding the pellets 11 comprises a screw feeder rotatably inserted in the duct and configured to rotate about its own axis of rotation extending along the main direction of extension of the duct. It should be noted that the burner 8 is normally positioned in its combustion compartment 5a which is in turn positioned inside the heating chamber 5. More specifically, the stove 1 comprises a heat exchanger positioned inside the heating chamber 5 and operatively connected with the burner 8 to introduce heat in the heating chamber 5. In other words, the combustion compartment 5a exchanges heat with the heating chamber 5 in such a way to introduce heat in the heating chamber 5. Moreover, the stove 1 comprises means 12 for causing hot air circulation operatively associated with the heating chamber 5 for producing a hot air flow from the heating chamber 5 towards the cooking chamber 4 for heating the food. More specifically, the means 12 for circulating hot air comprise a motor and a fan. In practice, the flow of air for the cooking is heated thanks to the heat exchange with occurs the heat exchanger and then passes through the openings 6a, 6b of the dividing wall 3 and enters the cooking chamber 4. The flow of hot air then passes from the cooking chamber 4 to the heating chamber 5 through the openings 6a, 6b. More in detail, to avoid interference, some openings 6a are used for the passage of the air from the heating chamber 5 to the cooking chamber 4 and other openings 6b are used to return air from the cooking chamber 4 to the heating chamber 5. In the preferred embodiment shown in Figure 1, it can be seen that the openings 6a used for the passage of the air from the heating chamber 5 to the cooking chamber 4 are spaced from the openings 6b used to return air from the cooking chamber 4 to the heating chamber 5. More specifically, Figure 1 shows that the openings 6a used for the passage of the air from the heating chamber 5 to the cooking chamber 4 are made at a first side wall of the cooking chamber, whilst the openings 6b used to return the air from the cooking chamber 4 to the heating chamber 5 are positioned at a second side wall which is distinct from the first. In other words, the openings 6a used for the passage of the air from the heating chamber 5 to the cooking chamber 4 and the openings 6b used to return air from the cooking chamber 4 to the heating chamber 5 are positioned in zones diametrically opposite each other. In that way, there is a physical distance between the circulation of the hot air being fed relative to the hot air being returned.

Preferably, the heating chamber 5 has a combustion compartment 5a in which the burner 8 is positioned and a further compartment 5b, separate from combustion compartment 5a, in which the means 12 for circulating hot air are positioned. As already mentioned, the cooking chamber 4 comprises a rotatable carriage on which the foods to be cooked are placed. More specifically, the carriage rotates according to a substantially vertical axis and it is movable so that it can be extracted from the cooking chamber 4 once the food has been heated. For this reason, the cooking chamber 4 is defined below by a lower wall 13 where a pin 14 is positioned. The pin 14 is shaped to be coupled to the carriage once the latter has been introduced into the cooking chamber 4.

In addition, the cooking chamber 4 is defined above by an upper wall (not visible in the accompanying drawings), where there is a motor-driven rotary hook designed to be coupled to the carriage once the latter has been introduced into the cooking chamber 4. More specifically, the hook is aligned with the pin 14 according to an axis extending between the lower wall 13 and the upper wall. As already mentioned, the hook is motor driven and preferably connected to a gear motor.

In an alternative embodiment not illustrated in the accompanying drawings, the hook could be located at the lower wall 13 of the cooking chamber and the pin 14 positioned at the upper wall.

Moreover, the burner 8 is configurable at least between a switched off state in which it does not generate heat and an active state in which it generates heat. As already mentioned, the generation of the heat is a direct consequence of the combustion of the pellets 11. It should be noted that the burner 8 also comprises an element for triggering the combustion, designed to trigger the combustion (for example by means of a spark). The stove 1 also comprises a unit 15 for controlling the burner 8 and the unit 9 for feeding the pellets 11. More specifically, the control unit 15 is operatively connected to the burner to configure it between the switched off state and the active state. According to the invention, the control unit 15 is operatively connected to the unit 9 for feeding pellets for adjusting the quantity of pellets 11 to feed to the burner 8. More in detail, the unit for feeding the pellets 11 is configurable between a plurality of SET conditions differing according to the quantity of pellets 11 to be fed to the burner. In other words, a first quantity of pellets 11 fed to the burner 8 corresponds with a first condition SET1, a second quantity of pellets 11 greater than the first fed to the burner 8 corresponds with a second condition SET2 and so on.

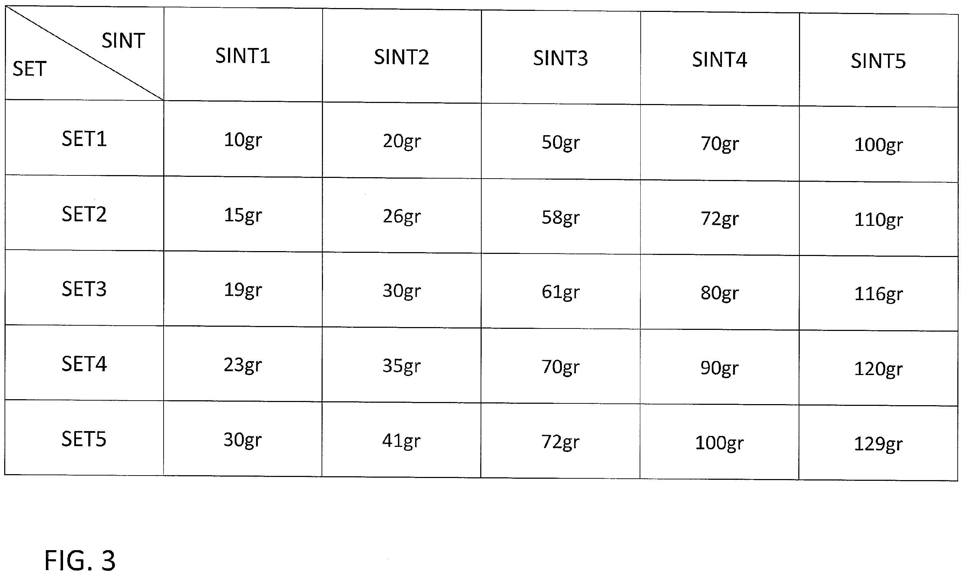

Each SET condition has been indicated in the table in Figure 3 with the reference "SET1", "SET2", etc. As shown, each SET condition corresponds to a respective quantity of pellets (indicated in grams). More in detail, an increase in the quantity of pellets corresponds to a progressive number of the respective SET condition. It should be noted that the values of the quantity of pellets indicated in the table of Figure 3 are indicated purely by way of an example.

It should be noted that the control unit 15 comprises a control interface 16 accessible to an operator for manually entering certain parameters and for graphically displaying data which is specified in more detail below. Moreover, the stove 1 comprises means 17 for measuring the temperature of the cooking chamber 4 operatively connected to the control unit 15 for transmitting to the latter the information relative to the instantaneous temperature measured TR. More in detail, the measuring means 17 comprise a temperature sensor positioned inside the cooking chamber 4 to measure the temperature. Preferably, the measuring means 17 measure the temperature in an instantaneous manner. In Figure 1, the measuring means 17 are positioned inside a side channel which carries the hot air into the cooking chamber 4, thus measuring the temperature in the cooking chamber 4.

According to this invention, the control unit 15 is configured for calculating the time TSC for heating the cooking chamber 4 to pass from a first predetermined temperature value T100 to a second predetermined temperature value T200. According to the invention, the control unit 15 comprises a counter configured to count the heating time TSC. In the preferred embodiment, the measured heating time TSC is the time needed to raise the temperature of the cooking chamber 4 from 100°C to 200°C. However, these values are given purely by way of an example and could be varied according to the requirements.

Moreover, the control unit 15 is configured for comparing the measured heating time TSC with at least one predetermined time value.

Next, the control unit 15 is configured for modifying the SET condition of the unit for feeding pellets 11 as a function of the comparison so that if the heating time TSC is greater than the predetermined time value the feed unit 9 is configured in a SET condition for feeding more pellets 11 than the previous SET condition. If, on the other hand, the heating time TSC is less than the predetermined time value the feed unit 9 is configured in a SET condition for feeding less pellets 11 than the previous SET condition.

In other words, if the heating time TSC is greater than the predetermined time value the control unit 15 instructs the feed unit 9 to increase the quantity of pellets 11 supplied to the burner 8 in such a way as to compensate for the increase in performance. That situation might be linked to the presence of poor quality pellets 11 and, consequently, the increase in the quantity of pellets 11 (fuel) makes it possible to keep substantially constant the quantity of heat produced in the heating chamber 5.

If, on the other hand, the heating time TSC is less than the predetermined time value the control unit 15 instructs the feed unit 9 to reduce the quantity of pellets 11 supplied to the burner 8 in such a way as to compensate for the drop in performance. That situation might be linked to the presence of good quality pellets 11 and, consequently, the reduction in the quantity of pellets 11 makes it possible to keep substantially constant the quantity of heat produced in the heating chamber 5.

It should be noted that these operations are performed before placing the food in the stove, that is to say, during the step of heating the cooking chamber 4, in such a way that, during cooking of the food, the stove 1 has already compensated for the heat variations linked to the quality of the pellets 11 or to a poor combustion.

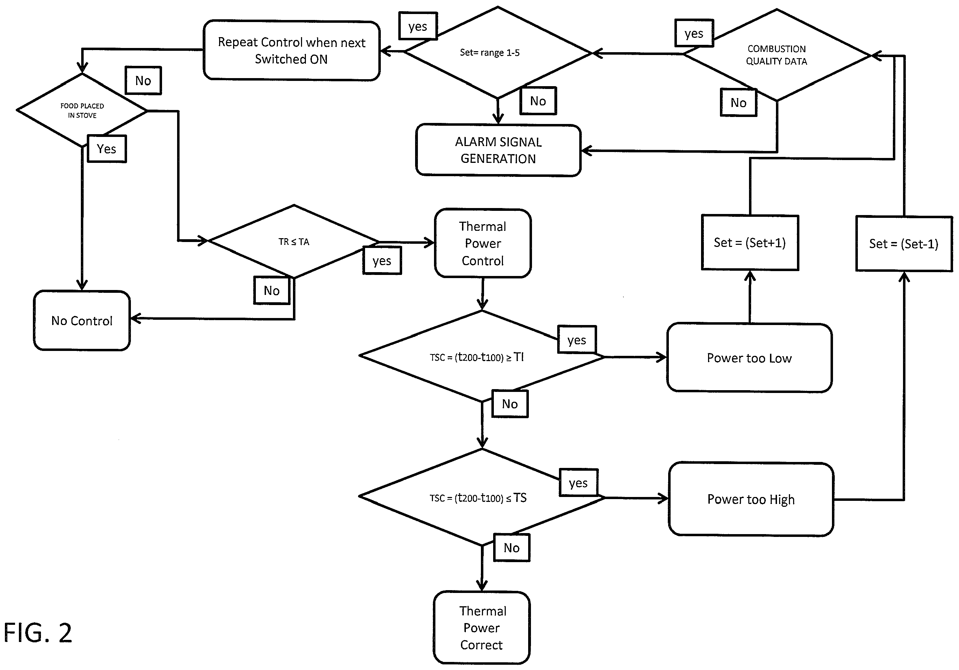

In the preferred embodiment illustrated in Figure 2, the control unit 15 contains two different predetermined time values: a first predetermined time value TI and a second predetermined time value TS less than the first.

In that case, the control unit 15 is configured for comparing the measured heating time TSC with the first predetermined time value TI and, in succession, with the second predetermined time value TS. More specifically, the control unit 15 is configured for changing the feed unit 9 to a SET condition for feeding more pellets 11 than the previous SET condition if the heating time TSC is greater than the first predetermined time value TI. In other words, the control unit 15 is configured for changing the feed unit 9 to a SET condition for feeding more pellets 11 than the quantity of pellets fed in the previous SET condition if the heating time TSC is greater than the first predetermined time value TI.

On the contrary, that is, if the heating time TSC is less than the first predetermined time value TI, the control unit 15 is configured for changing the feed unit 9 to a SET condition for feeding less pellets 11 than the previous SET condition if the heating time TSC is less than the second predetermined time value TS. In other words, the control unit 15 is configured for changing the feed unit 9 to a SET condition for feeding less pellets 11 than the quantity of pellets fed in the previous SET condition if the heating time TSC is less than the second predetermined time value TS.

However, if the heating time TSC is less than the first predetermined time value TI, the control unit 15 is configured for maintaining the feed unit 9 in the same SET condition for feeding pellets 11 if the heating time TSC is between the first predetermined time value TI and the second predetermined time value TS.

In other words, if the heating time TSC falls between a period of time between the first predetermined time value TI and the second predetermined time value TS, the control unit 15 is configured for maintaining the feed unit 9 in the previous SET condition for feeding pellets 11.

It should be noted that, when the drive unit 15 switches on the burner 8, it configures the unit 9 for feeding pellets 11 in a predetermined SET starting condition which is then varied as a function of the comparisons of the predetermined time value.

In other words, the means for feeding the pellets 11 are in a initial predetermined SET condition and then change the relative SET operating condition as a function of the comparisons which are performed with the predetermined time value.

Preferably, the first predetermined time value TI is between 10 and 12 minutes and the second predetermined time value TS is between 7 and 9 minutes.

The stove 1 also comprises means for measuring the quality of the exhaust gasses operatively associated with the burner 8. The means for measuring the gas quality comprise a plurality of measuring devices, such as: a probe for measuring the combustion quality operatively associated with the burner 8 and/or a device for measuring the quality of exhaust fumes and/or a sensor for measuring the exhaust air and/or other aspects not expressly indicated.

More specifically, the control unit 15 is configured, after modifying the SET condition of the unit 9 for feeding the pellets 11, to measure data representing the combustion quality. For example, that data may represent the output signal of the measuring probe or the device for measuring the quality of the exhaust fumes or the sensor for measuring the exhaust air. If the measuring means comprise more than one of the above-mentioned devices, the data item comprises a string of values.

Moreover, the control unit 15 is configured for comparing the data with predetermined quality data. The predetermined quality data represents a threshold limit between a correct combustion and an incorrect combustion.

Obviously, if the measuring means comprise more than one of the above-mentioned devices, the predetermined quality data comprises a string of predetermined values each relating to a respective measuring device. Lastly, the control unit 15 is configured for generating an alarm signal if the data measured does not correspond with the predetermined quality data or does not fall within a predetermined range of the predetermined quality data. More specifically, the control unit 15 is configured for sending the alarm signal to the control interface 16 in such a way as to provide the user with a luminous and/or audio signal.

Moreover, following modification of the SET condition of the unit 9 for feeding pellets 11, the control unit 15 is configured to check that the SET condition of the unit 9 for feeding pellets 11 falls within a predetermined range of standard SET conditions. In effect, the modification of the SET condition of the unit 9 for feeding pellets 11 might have modified the unit 9 for feeding pellets 11 outside the standard SET conditions, that is to say, into a potentially dangerous SET condition. It should be noted that, preferably, the standard SET conditions comprise the five SET conditions shown in Figure 3.

More specifically, the control unit 15 is further configured to generate the alarm signal if the SET condition of the unit 9 for feeding pellets 11 does not fall within the predetermined range of standard SET conditions. More specifically, as already mentioned, the control unit 15 is configured for sending the alarm signal to the control interface 16 in such a way as to provide the user with a luminous and/or audio signal.

It should be noted that the control unit 15 is configured for checking that the SET condition of the unit 9 for feeding pellets 11 falls within the predetermined range of standard SET conditions only if the data measured relative to the quality of the exhaust gasses corresponds with the predetermined quality data. In other words, as shown in Figure 2, if the data measured relative to the quality of the exhaust gasses corresponds with the predetermined quality data, the control unit 15 is configured for checking that the SET condition of the unit 9 for feeding pellets 11 falls within the predetermined range of standard SET conditions.

If the SET condition of the unit 9 for feeding pellets 11 falls within the predetermined range of standard SET conditions, the control unit 15 is configured for generating an OK signal representing a correct operation of the stove 1 both in terms of combustion and the right quantity of pellets 11. In addition, the unit 9 for feeding pellets 11 is configurable between a plurality of intermediate SINT stages for each SET condition. More specifically, each intermediate SINT stage is defined by a respective production of a predetermined quantity of heat. In other words, for each stage the burner 8 generates a predetermined quantity of heat different from that generated for the other stages. Preferably, the quantity of heat generated increases during passage from one stage to the next. In practice, each stage corresponds to a predetermined quantity of pellets 11 fed by the feed unit 9. In the preferred embodiment, the unit 9 for feeding pellets 11 is configurable between five stages in relation to the quantity of heat in an incremental fashion.

In other words, whilst the operational SET condition of the unit 9 for feeding pellets 11 is selected as a function of the heating time TSC, the intermediate step SINT is selected as a function of the quantity of heat necessary required by the user within the selected SET condition.

Further, it should be noted that the control unit 15, before comparing the measured heating time TSC with the predetermined time value, is configured for comparing the measured temperature value TR with a minimum temperature value TA less than the first predetermined temperature value T100. The minimum temperature value TA represents the fact that the stove 1 is switched off or has a low internal temperature relative to the cooking temperatures of the food. In other words, the minimum temperature value TA represents the fact that the cooking chamber 4 is substantially cold and ready to perform the measuring of the heating time TSC. Preferably, the minimum temperature value is between 10°C and 50°C.

More specifically, the control unit 15 is configured for comparing the measured heating time TSC with at least one predetermined time value only if the measured temperature value TR is less than the minimum temperature value TA. If this is not the case, the control unit 15 does not perform any measurement of the heating time TSC.

This invention also relates to a method for controlling the stove 1 fuelled with pellets 11 of the type described above. More specifically, it should be noted that the method is derived directly from what is described above, which is here below incorporated in its entirety.

The method according to this invention comprises a first operating step for feeding a predetermined quantity of pellets 11 to the burner 8. The method then comprises calculating the time TSC for heating the cooking chamber 4 to pass from the first predetermined temperature value T100 to the second predetermined temperature value T200.

In that way, it is possible to perform a subsequent step of comparing the measured heating time TSC with the first predetermined time value TI and with the second predetermined time value TS.

More specifically, the method comprises increasing the quantity of pellets 11 fed to the burner 8 if the heating time TSC is greater than the first predetermined time value TI. On the contrary, the method comprises decreasing the quantity of pellets 11 fed to the burner 8 if the heating time TSC is less than the second predetermined time value TS. In the intermediate case, the method comprises maintaining the quantity of pellets 11 fed to the burner 8 if the heating time TSC is between the first predetermined time value TI and the second predetermined time value TS. This invention achieves the pre-set aims.

More specifically, the measurement of the time needed to bring the cooking chamber from a first predetermined temperature value to a second predetermined temperature value makes it possible to identify (by comparison with at least one predetermined time value) the type of pellets which have been fed and the quality of the combustion. Consequently, the variation of the condition of the unit for feeding the pellets makes it possible to compensate for modifications to the system and, therefore, to generate heat which is as constant as possible under equal conditions required by the user.

This invention also allows the intensity of heat generated by the burner to be varied by modifying the intermediate stage along a plurality of predetermined optimum values.

It should also be noted that this invention is relatively easy to implement and that the cost of implementing the invention is relatively low.

## Claims

1. A stove (1) fuelled with pellets (11) for cooking food, comprising:
- a frame (2) forming internally a space, the frame (2) comprising a dividing wall (3) designed for subdividing the space into a chamber(4) for cooking the food and a heating chamber (5);
a burner (8) for pellets (11) positioned in the heating chamber (5) for generating heat;
a unit (9) for feeding pellets (11) to the burner (8) operatively connected to the burner (8) for feeding pellets (11) to the burner (8); the unit (9) for feeding the pellets (11) being configurable between a plurality of conditions (SET) differing according to the quantity of pellets (11) to be fed to the burner (8);
- means (12) of circulating hot air, positioned at least partially inside the heating chamber (5) for forming a flow of hot air from the heating chamber (5) to the cooking chamber (4) so as to heat the food;
**characterised in that** the stove comprises a control unit (15) operatively connected to the unit (9) for feeding pellets for adjusting the quantity of pellets (11) to feed to the burner (8); the control unit (15) being configured for controlling the unit (9) for feeding pellets (11) designed for adjusting the quantity of pellets (11) to feed to the burner (8);
means (17) for measuring the temperature of the heating chamber (4) operatively connected to the control unit (15) for transmitting to the latter information relative to the measured temperature; wherein the control unit (15) comprises a counter configured to count the heating time (TSC) and **in that** the control unit (15) is designed to perform the following operations:
calculating the time (TSC) for heating the cooking chamber (4) to pass from a first predetermined temperature value (T100) to a second predetermined temperature value (T200);
comparing the measured heating time (TSC) with at least one predetermined time value;
modifying the condition (SET) of the unit (9) for feeding pellets (11) as a function of the comparison so that if the heating time (TSC) is greater than the predetermined time value the feed unit (9) is configured in a condition (SET) for feeding more pellets (11) than the previous condition (SET), if the heating time (TSC) is less than the predetermined time value the feed unit (9) is configured in a condition (SET) for feeding less pellets (11) than the previous condition (SET).

2. The stove (1) fuelled with pellets (11) according to claim 1, **characterised in that** the control unit (15) is designed for:
comparing the measured heating time (TSC) with a first predetermined time value TI and with a second predetermined time value TS less than the first;
configuring the feed unit (9) in a condition (SET) for feeding more pellets (11) than the previous condition (SET) if the heating time (TSC) is greater than the first predetermined time value TI;
configuring the feed unit (9) in a condition (SET) for feeding less pellets (11) than the previous condition (SET) if the heating time (TSC) is less than the second predetermined time value TS;
maintaining the feed unit (9) in the same condition (SET) for feeding pellets (11) if the heating time (TSC) is between the first predetermined time value TI and the second predetermined time value TS.

3. The stove (1) according to claim 2, **characterised in that** the measured heating time (TSC) is the time necessary to raise the temperature of the cooking chamber (4) from 100°C to 200°C; the first predetermined time value (TI) being between 10 and 12 minutes and the second predetermined time value (TS) being between 7 and 9 minutes.

4. The stove (1) according to any one of the preceding claims, **characterised in that** it comprises means (17) for measuring the quality of the exhaust gases operatively associated with the burner (8); the control unit (15) being designed for performing the following operations, following modification of the condition (SET) of the unit (9) for feeding the pellets (11):
measuring data representing the quality of combustion;
comparing the data with predetermined quality data;
generating an alarm signal if the data measured does not correspond with the predetermined quality data.

5. The stove (1) according to claim 4, **characterised in that**, following modification of the condition (SET) of the unit (9) for feeding pellets (11), the control unit (15) is configured for checking that the condition (SET) of the unit (9) for feeding pellets (11) falls within a predetermined range of standard conditions (SET); the control unit (15) being further configured for generating an alarm signal if the condition (SET) of the unit (9) for feeding pellets (11) does not fall within the predetermined range of standard conditions (SET).

6. The stove (1) according to claim 5, **characterised in that** the control unit (15) is configured for checking that the condition (SET) of the unit (9) for feeding pellets (11) falls within the predetermined range of standard conditions (SET) if the data measured relative to the quality of the exhaust gasses corresponds with the predetermined quality data.

7. The stove (1) according to any one of claims 5 to 6, **characterised in that** the control unit (15) is configured for generating an OK signal if the condition (SET) of the unit (9) for feeding pellets (11) falls within the predetermined range of standard conditions (SET).

8. The stove (1) according to any one of the preceding claims, **characterised in that** the unit (9) for feeding pellets (11) is configurable between a plurality of intermediate stages (SINT) for each condition (SET); each intermediate stage (SINT) being defined by a respective production of a predetermined quantity of heat.

9. The stove (1) according to any one of the preceding claims, **characterised in that** the control unit (15), before comparing the measured heating time (TSC) with at least one predetermined time value, is configured for comparing the measured temperature value (TR) with a minimum temperature value (TA) less than the first predetermined temperature value (T100); the control unit (15) being configured for comparing the measured heating time (TSC) with at least one predetermined time value only if the measured temperature value (TR) is less than the minimum temperature value (TA).

10. A method for controlling a stove (1) according to claim 1, the method comprising the following operating steps:
feeding a predetermined quantity of pellets (11) to the burner (8);
calculating the time (TSC) for heating the cooking chamber (4) to pass from a first predetermined temperature value (T100) to a second predetermined temperature value (T200);
comparing the measured heating time (TSC) with at least one predetermined time value;
increasing the quantity of pellets (11) fed to the burner (8) if the heating time (TSC) is greater than the predetermined time value;
decreasing the quantity of pellets (11) fed to the burner (8) if the heating time (TSC) is less than the predetermined time value.

## Patentansprüche

1. Mit Pellets (11) betriebener Backofen (1) zum Kochen von Lebensmitteln, umfassend:
- einen Rahmen (2), der im Inneren einen Raum bildet, wobei der Rahmen (2) eine Trennwand (3) umfasst, die zum Unterteilen des Raums in eine Kammer (4) zum Kochen von Lebensmitteln und eine Heizkammer (5) ausgelegt ist; einen Brenner (8) für Pellets (11), der in der Heizkammer (5) positioniert ist, um Hitze zu erzeugen;
eine Einheit (9) zum Zuführen von Pellets (11) zu dem Brenner (8), die betriebswirksam mit dem Brenner (8) verbunden ist, um Pellets (11) zum Brenner (8) zuzuführen, wobei die Einheit (9) zum Zuführen von Pellets (11) zwischen eine Vielzahl an Zuständen (SET) konfigurierbar ist, die sich nach der dem Brenner (8) zuzuführenden Menge an Pellets (11) unterscheiden;
- Mittel (12) zum Umwälzen heißer Luft, die mindestens teilweise innerhalb der Heizkammer (5) positioniert sind, um einen Heißluftstrom von der Heizkammer (5) zur Kochkammer (4) zu bilden, um die Lebensmittel zu erhitzen;
**dadurch gekennzeichnet, dass** der Backofen
eine Steuereinheit (15) umfasst, die betriebswirksam mit der Einheit (9) zum Zuführen von Pellets zum Einstellen der Menge an Pellets (11) verbunden ist, die dem Brenner (8)zuzuführen ist, wobei die Steuereinheit (15) konfiguriert ist, um die Einheit (9) zum Zuführen von Pellets (11) zu steuern, die zum Einstellen der dem Brenner (8) zuzuführenden Menge an Pellets (11) ausgelegt ist;
Mittel (17) zum Messen der Temperatur der Heizkammer (4), die betriebswirksam mit der Steuereinheit (15) verbunden ist, um zu der Letzteren Information relativ zu der gemessenen Temperatur zu übertragen,
wobei die Steuereinheit (15) einen Zähler umfasst, der konfiguriert ist, um die Heizzeit (TSC) zu zählen, und dadurch, dass die Steuereinheit (15) ausgelegt ist, um die folgenden Vorgänge auszuführen:
Berechnen der Zeit (TSC) zum Erhitzen der Kochkammer (4), um von einem ersten vorbestimmten Temperaturwert (T100) zu einem zweiten vorbestimmten Temperaturwert (T200) zu übergehen;
Vergleichen der gemessenen Heizzeit (TSC) mit mindestens einem vorbestimmten Zeitwert;
Modifizieren des Zustands (SET) der Einheit (9) zum Zuführen von Pellets (11) als Funktion des Vergleichs, so dass die Zuführeinheit (9), wenn die Heizzeit (TSC) größer als der vorbestimmte Zeitwert ist, in einem Zustand (SET) zum Zuführen von mehr Pellets (11) als im vorherigen Zustand (SET) konfiguriert ist, wenn die Heizzeit (TSC) niedriger als der vorbestimmte Zeitwert ist, ist die Zuführeinheit (9) in einem Zustand (SET) zum Zuführen von weniger Pellets (11) als im vorherigen Zustand (SET) konfiguriert.

2. Mit Pellets (11) betriebener Backofen (1) nach Anspruch 1, **dadurch gekennzeichnet, dass** die Steuereinheit (15) ausgelegt ist zum:
Vergleichen der gemessenen Heizzeit (TSC) mit einem ersten vorbestimmten Zeitwert TI und mit einem zweiten vorbestimmten Zeitwert TS, der niedriger als der erste ist;
Konfigurieren der Zuführeinheit (9) in einem Zustand (SET) zum Zuführen von mehr Pellets (11) als im vorherigen Zustand (SET), wenn die Heizzeit (TSC) größer als der erste vorbestimmte Zeitwert TI ist;
Konfigurieren der Zuführeinheit (9) in einem Zustand (SET) zum Zuführen von weniger Pellets (11) als im vorherigen Zustand (SET), wenn die Heizzeit (TSC) niedriger als der zweite vorbestimmte Zeitwert TS ist;
Beibehalten der Zuführeinheit (9) im gleichen Zustand (SET) zum Zuführen von Pellets (11), wenn die Heizzeit (TSC) zwischen dem ersten vorbestimmten Zeitwert TI und dem zweiten vorbestimmten Zeitwert TS liegt.

3. Backofen (1) nach Anspruch 2, **dadurch gekennzeichnet, dass** die gemessene Heizzeit (TSC) die Zeit ist, die erforderlich ist, um die Temperatur der Kochkammer (4) von 100 °C auf 200 °C zu erhöhen, wobei der erste vorbestimmte Zeitwert (TI) zwischen 10 und 12 Minuten liegt und der zweite vorbestimmte Zeitwert (TS) zwischen 7 und 9 Minuten liegt.

4. Backofen (1) nach einem der vorhergehenden Ansprüche, **dadurch gekennzeichnet, dass** er Mittel (17) zum Messen der Qualität der Abgase umfasst, die betriebswirksam mit dem Brenner (8) verbunden sind, wobei die Steuereinheit (15) zur Ausführung der folgenden Vorgänge nach einer Änderung des Zustands (SET) der Einheit (9) zum Zuführen der Pellets (11) ausgelegt ist:
Messen von Daten, die die Verbrennungsqualität darstellen;
Vergleichen der Daten mit vorbestimmten Qualitätsdaten;
Erzeugen eines Alarmsignals, wenn die gemessenen Daten nicht mit den vorbestimmten Qualitätsdaten übereinstimmen.

5. Backofen (1) nach Anspruch 4, **dadurch gekennzeichnet, dass** die Steuereinheit (15) nach Änderung des Zustands (SET) der Einheit (9) zum Zuführen von Pellets (11) konfiguriert ist, um zu überprüfen, dass der Zustand (SET) der Einheit (9) zum Zuführen von Pellets (11) in einen vorbestimmten Bereich von Standardzuständen (SET) fällt, wobei die Steuereinheit (15) zudem zum Erzeugen eines Alarmsignals konfiguriert ist, wenn der Zustand (SET) der Einheit (9) zum Zuführen von Pellets (11) nicht in den vorbestimmten Bereich der Standardzustände (SET) fällt.

6. Backofen (1) nach Anspruch 5, **dadurch gekennzeichnet, dass** die Steuereinheit (15) konfiguriert ist, um zu überprüfen, dass der Zustand (SET) der Einheit (9) zum Zuführen von Pellets (11) in den vorbestimmten Bereich der Standardzustände (SET) fällt, wenn die gemessenen Daten relativ zu der Qualität der Abgase mit den vorbestimmten Qualitätsdaten übereinstimmen.

7. Backofen (1) nach einem der Ansprüche 5 bis 6, **dadurch gekennzeichnet, dass** die Steuereinheit (15) konfiguriert ist, um ein OK-Signal zu erzeugen, wenn der Zustand (SET) der Einheit (9) zum Zuführen von Pellets (11) in den vorbestimmten Bereich der Standardzustände (SET) fällt.

8. Backofen (1) nach einem der vorhergehenden Ansprüche, **dadurch gekennzeichnet, dass** die Einheit (9) zum Zuführen von Pellets (11) zwischen einer Vielzahl an Zwischenstufen (SINT) für jeden Zustand (SET) konfigurierbar ist, wobei jede Zwischenstufe (SINT) durch eine jeweilige Produktion einer vorbestimmten Wärmemenge definiert ist.

9. Backofen (1) nach einem der vorhergehenden Ansprüche, **dadurch gekennzeichnet, dass** die Steuereinheit (15) vor dem Vergleichen der gemessenen Heizzeit (TSC) mit mindestens einem vorbestimmten Zeitwert zum Vergleichen des gemessenen Temperaturwerts (TR) mit einem minimalen Temperaturwert (TA), der niedriger als der erste vorbestimmte Temperaturwert (T100) ist, konfiguriert ist, wobei die Steuereinheit (15) dazu konfiguriert ist, um die gemessene Heizzeit (TSC) mit mindestens einem vorbestimmten Zeitwert zu vergleichen nur, wenn der gemessene Temperaturwert (TR) niedriger als der minimale Temperaturwert (TA) ist.

10. Verfahren zum Steuern eines Backofens (1) nach Anspruch 1, wobei das Verfahren die folgenden Arbeitsschritte umfasst:
Zuführen einer vorbestimmten Menge an Pellets (11) zum Brenner (8);
Berechnen der Zeit (TSC) zum Erhitzen der Kochkammer (4), um von einem ersten vorbestimmten Temperaturwert (T100) zu einem zweiten vorbestimmten Temperaturwert (T200) zu übergehen;
Vergleichen der gemessenen Heizzeit (TSC) mit mindestens einem vorbestimmten Zeitwert;
Erhöhen der dem Brenner (8) zugeführten Menge an Pellets (11), wenn die Heizzeit (TSC) größer als der vorbestimmte Zeitwert ist;
Verringern der dem Brenner (8) zugeführten Menge an Pellets (11), wenn die Heizzeit (TSC) niedriger als der vorbestimmte Zeitwert ist.

## Revendications

1. Four (1) alimenté en granulés (11) destiné à cuir des aliments, comprenant :
- un châssis (2) formant en son sein un espace ; le châssis (2) comprenant une cloison de séparation (3) conçue pour diviser l'espace en une chambre (4) servant à cuire les aliments et une chambre de chauffage (5) ; un brûleur (8) pour granulés (11) positionné dans la chambre de chauffage (5) pour générer de la chaleur ; une unité (9) servant à alimenter les granulés (11) au brûleur (8) fonctionnellement reliée au brûleur (8) pour alimenter les granulés (11) au brûleur (8) ; l'unité (9) servant à alimenter les granulés (11) pouvant être configurée entre une pluralité de conditions (SET) différant selon la quantité de granulés (11) à alimenter au brûleur (8) ;
- des moyens (12) de circulation d'air chaud, positionnés au moins partiellement à l'intérieur de la chambre de chauffage (5) pour former un flux d'air chaud de la chambre de chauffage (5) à la chambre de cuisson (4) de manière à chauffer les aliments ;
**caractérisé en ce que** le four comprend
une unité de commande (15) fonctionnellement reliée à l'unité (9) servant à alimenter les granulés pour régler la quantité de granulés (11) à alimenter au brûleur (8) ;
l'unité de commande (15) étant configurée pour commander l'unité (9) d'alimentation des granulés (11) conçue pour régler la quantité de granulés (11) à alimenter au brûleur (8) ;
des moyens (17), servant à mesurer la température de la chambre de chauffage (4), fonctionnellement reliés à l'unité de commande (15) pour transmettre à cette dernière des informations relatives aux températures mesurées ;
dans lequel l'unité de commande (15) comprend un compteur configuré pour compter le temps de chauffage (TSC) et **en ce que** l'unité de commande (15) est conçue pour effectuer les opérations suivantes :
calculer le temps (TSC) de chauffage de la chambre de chauffage (4) pour passer d'une première valeur de température (T100) prédéterminée à une seconde valeur de température (T200) prédéterminée ;
comparer le temps de chauffage (TSC) mesuré à au moins une valeur de temps déterminée ;
modifier la condition (SET) de l'unité (9) d'alimentation des granulés (11) en fonction de la comparaison de sorte que si le temps de chauffage (TSC) est supérieur à la valeur de temps prédéterminée, l'unité d'alimentation (9) est configurée dans une condition (SET) destinée à alimenter davantage de granulés (11) que dans la précédente condition (SET), si le temps de chauffage (TSC) est inférieur à la valeur de temps prédéterminée, l'unité d'alimentation (9) est configurée dans une condition (SET) destinée à alimenter moins de granulés (11) que dans la précédente condition (SET).

2. Four (1) alimenté en granulés (11) selon la revendication 1, **caractérisé en ce que** l'unité de commande (15) est conçue pour :
comparer le temps de chauffage (TSC) mesuré à une première valeur de temps TI prédéterminée et à une seconde valeur de temps TS prédéterminée inférieure à la première ;
configurer l'unité d'alimentation (9) dans une condition (SET) servant à alimenter davantage de granulés (11) que dans la précédente condition (SET) si le temps de chauffage (TSC) est supérieur à la première valeur de temps TI prédéterminée ;
configurer l'unité d'alimentation (9) dans une condition (SET) servant à alimenter moins de granulés (11) que dans la précédente condition (SET) si le temps de chauffage (TSC) est inférieur à la seconde valeur de temps TS prédéterminée ;
maintenir l'unité d'alimentation (9) dans la même condition (SET) pour alimenter les granulés (11) si le temps de chauffage (TSC) est compris entre la première valeur de temps TI prédéterminée et la seconde valeur de temps TS prédéterminée.

3. Four (1) selon la revendication 2, **caractérisé en ce que** le temps de chauffage (TSC) mesuré est le temps nécessaire pour élever la température de la chambre de cuisson (4) de 100 à 200 °C ; la première valeur de temps (TI) prédéterminée étant comprise entre 10 et 12 minutes et la seconde valeur de temps (TS) prédéterminée étant comprise entre 7 et 9 minutes.

4. Four (1) selon l'une quelconque des revendications précédentes, **caractérisé en ce qu'**il comprend des moyens (17) servant à mesurer la qualité des gaz d'échappement fonctionnellement associés au brûleur (8) ; l'unité de commande (15) étant conçue pour effectuer les opérations suivantes, suite à la modification de la condition (SET) de l'unité (9) d'alimentation en granulés (11) :
mesurer des données représentant la qualité de la combustion ;
comparer les données à des données de qualité prédéterminées ;
générer un signal d'alarme si les données mesurées ne correspondent pas aux données de qualité prédéterminées.

5. Four (1) selon la revendication 4, **caractérisé en ce que**, suite à la modification de la condition (SET) de l'unité (9) d'alimentation en granulés (11), l'unité de commande (15) est configurée pour vérifier que la condition (SET) de l'unité (9) d'alimentation en granulés (11) soit comprise entre des limites prédéterminées de conditions standard (SET) ; l'unité de commande (15) étant de plus configurée pour générer un signal d'alarme si la condition (SET) de l'unité (9) d'alimentation en granulés (11) n'est pas comprise dans les limites prédéterminées de conditions standard (SET).

6. Four (1) selon la revendication 5, **caractérisé en ce que** l'unité de commande (15) est configurée pour vérifier que la condition (SET) de l'unité (9) d'alimentation en granulés (11) soit comprise dans les limites prédéterminées de conditions standard (SET) si les données mesurées relatives à la qualité des gaz d'échappement correspondent aux données de qualité prédéterminées.

7. Four (1) selon l'une quelconque des revendications de 5 à 6, **caractérisé en ce que** l'unité de commande (15) est configurée pour générer un signal d'« OK » si la condition (SET) de l'unité (9) d'alimentation en granulés (11) est comprise dans les limites prédéterminées de conditions standard (SET).

8. Four (1) selon l'une quelconque des revendications précédentes, **caractérisé en ce que** l'unité (9) d'alimentation en granulés (11) peut être configurée entre une pluralité de stades intermédiaires (SINT) pour chaque condition (SET) ; chaque stade intermédiaire (SINT) étant défini par une production respective d'une quantité prédéterminée de chaleur.

9. Four (1) selon l'une quelconque des revendications précédentes, **caractérisé en ce que** l'unité de commande (15), avant de comparer le temps de chauffage (TSC) mesuré à au moins une valeur de temps prédéterminée, est configurée pour comparer la valeur de température (TR) mesurée à une valeur de température minimum (TA) inférieure à la première valeur de température (T100) prédéterminée ; l'unité de commande (15) étant configurée pour comparer le temps de chauffage (TSC) mesuré à au moins une valeur de temps prédéterminée uniquement si la valeur de température (TR) mesurée est inférieure à la valeur de température minimum (TA).

10. Procédé de commande d'un four (1) selon la revendication 1, le procédé comprenant les étapes fonctionnelles suivantes :
alimenter une quantité prédéterminée de granulés (11) au brûleur (8) ;
calculer le temps (TSC) de chauffage de la chambre de chauffage (4) pour passer d'une première valeur de température (T100) prédéterminée à une seconde valeur de température (T200) prédéterminée ;
comparer le temps de chauffage (TSC) mesuré à au moins une valeur de temps déterminée ;
augmenter la quantité de granulés (11) alimentés au brûleur (8) si le temps de chauffage (TSC) est supérieur à une valeur de temps prédéterminée ;
diminuer la quantité de granulés (11) alimentés au brûleur (8) si le temps de chauffage (TSC) est inférieur à la valeur de temps prédéterminée.
